# EUROPÄISCHE PATENTSCHRIFT

(11) **EP 2 181 368 B1**
(45) Veröffentlichungstag und Bekanntmachung des Hinweises auf die Patenterteilung: **26.12.2012**
(21) Anmeldenummer: 08803094.5
(22) Anmeldetag: 19.08.2008
(51) Int. Cl.: G05B 19/042, G05B 19/418, H04L 12/28

(54) **PROGRAMMIERVORRICHTUNG FÜR EIN NETZWERK AUS STEUERKNOTEN UND ANLAGE MIT EINER SOLCHEN PROGRAMMIERVORRICHTUNG**
PROGRAMMING DEVICE FOR A NETWORK OF CONTROL NODES AND SYSTEM WITH SUCH A PROGRAMMING DEVICE
DISPOSITIF DE PROGRAMMATION POUR UN RÉSEAU CONSTITUÉ DE NOEUDS DE COMMANDE ET INSTALLATION ÉQUIPÉE D'UN TEL DISPOSITIF DE PROGRAMMATION

(30) Priorität: 21.08.2007 DE 102007039428
(43) Veröffentlichungstag der Anmeldung: 05.05.2010
(73) Patentinhaber: Beckhoff Automation GmbH, 33415 Verl (DE)
(72) Erfinder: PAPENFORT, Josef, 32609 Hüllhorst (DE); HEITMANN, Ralf, 33818 Leopoldshöhe (DE); HOPPE, Gerd, 33378 Rheda-Wiedenbrück (DE)
(74) Vertreter: Patentanwaltskanzlei WILHELM & BECK
(86) Internationale Anmeldenummer: PCT/EP2008/060857
(87) Internationale Veröffentlichungsnummer: WO 2009/024576

(56) Entgegenhaltungen:
- EP-A- 0 747 792
- EP-A- 1 436 677
- WO-A-2005/093530
- DE-A1-102004 060 301
- US-A1- 2004 027 875
- US-B1- 6 574 234

## Beschreibung

Die Erfindung betrifft eine Programmiervorrichtung für ein Netzwerk aus Steuerknoten und eine Anlage mit einer solchen Programmiervorrichtung.

Moderne Konzepte für die Industrieautomation beruhen auf der Idee der dezentralen Steuerung. Die auszuführende Steuerungsaufgabe wird geographisch und funktionell optimal auf die Steuerungsknoten der dezentralen Steuerung aufgeteilt. Die Steuerungsknoten kommunizieren dabei untereinander und mit den übergeordneten Systemen über industrielle lokale Netzwerke. Durch die dezentrale Steuerung kann der Kommunikationsaufwand reduziert werden, da die einzelnen Steuerungsknoten auf ihre Bereiche bezogene Steuerungsaufgaben selbst übernehmen und nur zur Abstimmung mit den weiteren Steuerknoten bzw. mit den übergeordneten Systemen kommunizieren müssen. Die dezentrale Steuerung beruht dabei auf der Grundidee, die Automatisierungsaufgabe in einzelne funktionelle und logisch abgeschlossene Module aufzuteilen, die dann prozessnah angeordnet werden können, wodurch sich der Verkabelungs- und Installationsaufwand reduzieren lässt. Durch die Aufteilung in Module kann die Komplexität vermindert werden, sodass sich Funktionen einfacher realisieren lassen.

Ein weiterer Trend in der Automatisierungstechnik sind offene Systeme, die es dem Anwender ermöglichen, Automatisierungskomponenten von verschiedenen Herstellern zu kombinieren. Hierdurch besteht für den Anwender die Möglichkeit, für einzelne Teilaufgaben jeweils die beste technische Lösung einzusetzen und sich auch den günstigsten Hersteller auszusuchen. Eine wesentliche Anforderung an die Automatisierungskomponenten in offenen Systemen ist die Verbindbarkeit, d.h. die einzelnen Automatisierungskomponenten müssen prinzipiell in der Lage sein, Daten miteinander auszutauschen. Weiterhin erfordern offene Systeme Interoperabilität der Automatisierungskomponenten, d.h. die einzelnen Automatisierungskomponenten müssen definierte Profile aufweisen, um eine Zusammenarbeit bei der Durchführung der Automatisierungsaufgabe zu gewährleisten. Schlussendlich ist bei offenen Systemen die Austauschbarkeit von Automatisierungskomponenten verschiedener Hersteller gefordert, d.h. die Geräte der Hersteller müssen den gleichen Funktionsumfang aufweisen.

Trotz des Trends in der Automatisierungstechnik zu dezentralen offenen Systemen und den sich daraus ergebenden Kostenvorteilen besteht in der Automatisierungstechnik zunehmend das Problem eines Return-of-Investment aufgrund der sich immer weiter verkürzenden Produktlaufzeiten. Moderne Produkte werden zwar bereits derart entwickelt, dass sie sich gut automatisch herstellen lassen. Die Automatisierungssysteme zur Herstellung der Produkte sind in der Regel jedoch ganz spezifisch auf das Produkt ausgelegt und lassen sich deshalb nur mit hohem Aufwand an Produkt- und Prozessveränderungen anpassen.
WO 2005 / 093 530 A beschreibt ein Verfahren zum Konfigurieren der Kommunikationsbeziehungen zwischen Steuerknoten in einer Fertigungsanlage mit Hilfe eines der Steuerknoten, das alle Merkmale des Oberbegriffs des Anspruchs 1 offenbart.

Zielsetzung der Erfindung ist es, eine Programmiervorrichtung für ein Netzwerk aus Steuerknoten und eine Anlage mit einer solchen Programmiervorrichtung bereitzustellen, die ein flexibles Anlagenmanagement insbesondere hinsichtlich von Änderungen im Produktions- und Fertigungsprozess ermöglichen.

Diese Aufgabe wird erfindungsgemäß durch eine Programmiervorrichtung gemäß Anspruch 1 und eine Anlage gemäß Anspruch 11 gelöst. Bevorzugte Weiterbildungen sind in den abhängigen Ansprüchen angegeben.

In einer Anlage zur dezentralen Steuerung, die ein Netzwerk aus Steuerknoten aufweist, ist erfindungsgemäß eine Programmiervorrichtung vorgesehen, die die Kommunikationsbeziehung zwischen den Steuerknoten im Netzwerk festlegt. Die Program-miervorrichtung weist dazu ein Erfassungsmodul auf, um die an das Netzwerk angeschlossenen Steuerknoten zu ermitteln. Ferner ist ein mit dem Erfassungsmodul verbundenes Anlagenobjektmodul vorgesehen, das ein die Steuerknotenkonfiguration des Netzwerkes repräsentierendes Anlagenobjektmodell enthält, das die Kommunikationsbeziehungen zwischen den ermittelten Steuerknoten festlegt. Mit dem Anlagenobjektmodul ist in der Programmiervorrichtung ein Konfigurationsmodul verbunden, das die durch das Anlagenobjektmodul festgelegten Kommunikationsbeziehungen zwischen den Steuerknoten im Netzwerk auf die Steuerknoten überträgt.

Die erfindungsgemäße Auslegung ermöglicht eine dezentrale Steuerung in Form eines offenen Systems mit hoher Kompatibilität bezüglich der Steuerknoten. Änderungen im Produktions- und Fertigungsprozess, insbesondere Produktionserweiterung und Produktwechsel lassen sich auf einfache Weise ohne hohen Aufwand in der dezentralen Steuerung mithilfe der erfindungsgemäßen Programmiervorrichtung umsetzen, da die Programmiervorrichtung die Kommunikationsbeziehung zwischen den einzelnen Steuerknoten festlegen und damit an den gewünschten Produktions- und Fertigungsprozess anpassen kann.

Gemäß einer bevorzugten Ausführungsform ist das Anlagenobjektmodul in der Programmiervorrichtung so ausgelegt, dass auch die Kommunikationsbeziehungen zwischen den Teilnehmern im Steuerknoten auf der Grundlage des Anlagenobjektmoduls festgelegt und mithilfe des Konfigurationsmoduls dann auf den Steuerknoten übertragen werden. Mit dieser Auslegung wird eine weitere Flexibilisierung der dezentralen Steuerung erreicht, da ohne Programmierarbeiten am Steuerknoten selbst vornehmen zu müssen, die Prozessabläufe im Steuerknoten an die gewünschten Produktions- und Fertigungsabläufe angepasst werden können.

Gemäß einer weiteren bevorzugten Ausführungsform wird die Datenübertragung zwischen den Steuerknoten im Netzwerk in Form von Datenpaketen, die auf dem Netzwerk übertragen werden, durchgeführt, wobei die Steuerknoten so ausgelegt sind, ein Steuerknotenprozessabbild oder weitere Daten, die nicht zum Prozessabbild gehören, in Datentelegramme umzusetzen. Diese Auslegung des Datenverkehrs zwischen den Steuerknoten ermöglicht es, die Kommunikationsbeziehungen zwischen den Steuerknoten einfach und flexibel auszulegen, um eine optimale Anpassung an die Produktions- und Fertigungsprozesse zu erreichen.

Bevorzugt ist weiterhin, die Datenübertragung zwischen den Teilnehmern im Steuerknoten in Form von Datenabbildungsvorgängen durchzuführen, wobei jeder Teilnehmer im Steuerknoten ausgelegt ist, direkt auf das zwischen den Teilnehmern übertragene Steuerknotenprozessabbild oder weitere Daten, die nicht zum Prozessabbild gehören, zuzugreifen. Dieses Vorgehen bei der Datenübertragung sorgt für einen schnellen Datenaustausch im Steuerknoten. Insbesondere besteht die Möglichkeit, den Datenabbildungsvorgang auf zyklischen und deterministisch durchzuführen.

Die Erfindung wird anhand der beigefügten Zeichnungen näher erläutert.

Es zeigt
Fig. 1 schematisch ein Netzwerk mit Steuerknoten und Programmiervorrichtung;
Fig. 2 eine Programmiervorrichtungsarchitektur; und
Fig. 3A bis C eine Erkennungs-, Konfigurations- und Maschinenbetriebsphase in einem Netzwerk.

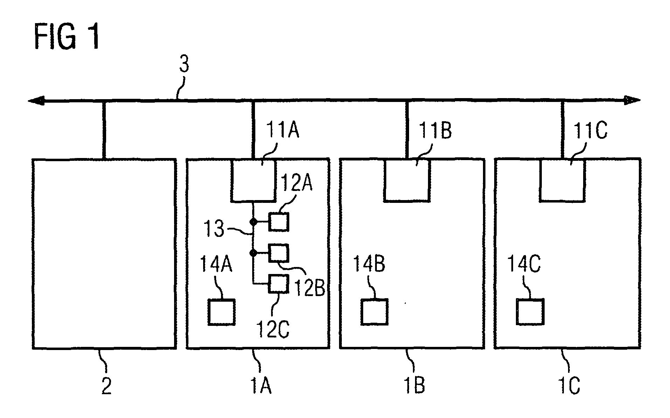

In der Industrieautomation, d.h. der Steuerung und Überwachung von technischen Prozessen mithilfe von Software in Rechnern werden zunehmend dezentrale Steuerungen eingesetzt. Bei dezentralen Steuerungen wird die Steuerungsaufgabe auf Steuerungsknoten aufgeteilt. Die Steuerungsknoten kommunizieren untereinander und, wenn erforderlich, mit übergeordneten Systemen über industrielle lokale Netzwerke. Fig. 1 zeigt eine solche dezentrale Steuerung mit drei Steuerknoten 1A, 1B, 1C und einer Programmiervorrichtung 2 zur Konfiguration und Überwachung des Netzwerkes. Die Steuerknoten 1 weisen jeweils eine Netzanschaltung 11 auf, die eine physische Schnittstelle zum Netzwerk bildet. Die Steuerungsknoten 1 und die Programmiervorrichtung 2 sind dabei über ein industrietaugliches Bussystem 3, einem sogenannten Feldbus miteinander verbunden. Die wesentliche Anforderung an das Feldbussystem beim Einsatz in der Prozess- und Fertigungstechnik ist die Echtzeitfähigkeit, d.h. das Feldbussystem muss gewährleisten, dass jedes gesendete Datenpaket innerhalb einer begrenzten garantierten Zeit beim Empfänger ankommt.

Die Steuerknoten selber können wiederum in einzelne funktionell und logisch abgeschlossene Teilnehmer aufgeteilt sein. Diese Modularisierung der Steuerungsknoten ermöglicht eine optimale Dezentralisierung der Steuerungsintelligenz. Die Teilnehmer sind dabei ähnlich wie der übergeordnete Steuerknoten so ausgelegt, dass sie die auf ihren Bereich bezogenen Aufgaben praktisch vollständig übernehmen und nur zur Abstimmung mit den weiteren Teilnehmern im Steuerknoten bzw. mit anderen Steuerknoten kommunizieren müssen. Fig. 1 zeigt einen Steuerknoten 1A mit drei Teilnehmern 12A, 12B, 12 C, die über ein internes Bussystem 13 mit der Netzwerkanschaltung 11 des Steuerknotens verbunden sind.

Jeder Steuerknoten weist eine Steuerknotenbeschreibung auf, die die Funktions- und Kommunikationseigenschaften des Steuerknotens darstellt. Diese Steuerknotenbeschreibung ist für alle Steuerknoten standardisiert und als Datei in einem Speicherbereich 14 des Steuerknotens abgelegt. Die einzelnen Teilnehmer weisen wiederum analog dem Steuerknoten eine eigene Teilnehmerbeschreibung auf, die die Kommunikations- und Funktionseigenschaften des Teilnehmers wiedergibt und als standardisierte Datei in einem Speicherbereich (nicht gezeigt) des Teilnehmer oder auch im Speicherbereich 14 des Steuerknotens abgelegt ist.

Problem bei herkömmlichen dezentralen Steuerungen in der Industrieautomation ist es, dass bei Produkt- und Fertigungsablaufänderungen der steuerungstechnische Inhalt der Anlage bzw. die Hardware der Steuerknoten aufwendig angepasst werden muss. Diese Anpassung lässt sich mit der erfindungsgemäß vorgesehenen Programmvorrichtung 2 am Anlagennetzwerk wesentlich reduzieren.

Die Programmiervorrichtung 2, die über den Feldbus 3 mit den Steuerknoten 1 bzw. den Teilnehmern 12 im Steuerknoten verbunden ist, kann in einem ersten Schritt die am Netzwerk angeschlossenen Steuerknoten bzw. Teilnehmer im Steuerknoten ermitteln. Anhand eines in der Programmiervorrichtung 2 vorgesehenen Anlagenobjektmodells kann die Programmiervorrichtung dann die Kommunikationsbeziehungen zwischen den ermittelten Steuerknoten bzw. den ermittelten Teilnehmern im Steuerknoten festlegen und diese Kommunikationsbeziehungen dann auf die Steuerknoten bzw. die Teilnehmer im Steuerknoten übertragen.

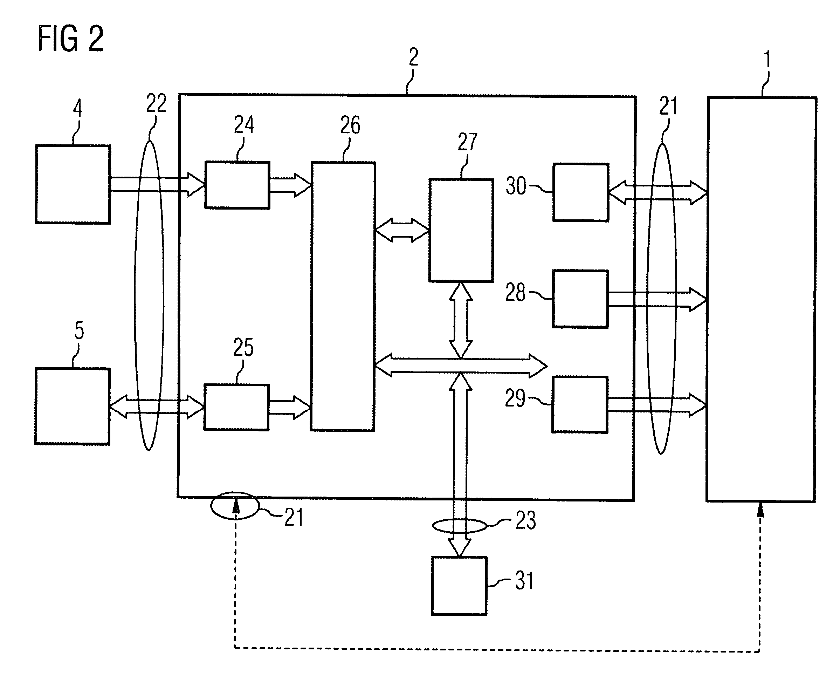

Der Aufbau der Programmiervorrichtung ist schematisch in Fig. 2 dargestellt. Die einzelnen Komponenten der Programmiervorrichtung können dabei sowohl in Hard- als auch in Software-Form ausgebildet sein. Die Programmiervorrichtung 2 weist drei Schnittstellen auf: eine erste Feldbus-Schnittstelle 21 zur Anbindung der Steuerknoten 1 über den Feldbus 3, die als Netzwerkanschaltung ausgebildet ist, eine Daten-Schnittstelle 22 und eine Mensch-Maschinen-Schnittstelle 23.

Über die Daten-Schnittstelle 22 kann die Programmiervorrichtung 2 eine Anlagenbeschreibung und eine Produkt- und Prozessbeschreibung z.B. von, wie in Fig. 2 gezeigt ist, einem Engineering-System 4, mit dem ein Anlagenentwurf zum Fertigen eines Produktes ausgeführt wurde, importieren. Die Anlagenbeschreibung enthält dabei die Orientierung und Reihenfolge der Netzwerkteilnehmer in Bezug auf die Gesamtanlage und eine Darstellung der Netzwerkparameter und Kommunikationsendpunkte.

Die Anlagenbeschreibung und die eine Produkt- und Prozessbeschreibung wird durch ein an die Daten-Schnittstelle 22 angeschlossenes Anlagenkonfigurations-Eingabemodul 24 in ein Objektmodell umgewandelt, das in einem standardisierten Format die Anlagenbeschreibung und die Produkt- und Prozessbeschreibung festhält.

Die Programmiervorrichtung weist ferner ein Gerätebeschreibungs-Ein/Ausgabemodul 25 auf, mit dem die Programmiervorrichtung 2 Steuerknoten- bzw. Teilnehmerbeschreibungen importieren bzw. exportieren kann. Das Gerätebeschreibungs-Ein/Ausgabemodul 25 kann dabei die Geräte- und Teilnehmerbeschreibung über die Daten-Schnittstelle 22 mit einer externen Datenbank 5 austauschen oder auch über die Daten-Schnittstelle 21 von den Steuerknoten bzw. den Teilnehmern im Steuerknoten abfragen. Weiterhin besteht auch die Möglichkeit, dass über das Gerätebeschreibungs-Ein-/Ausgabemodul 25 aktualisierte Gerätebeschreibungen in die Steuerknoten bzw. die Teilnehmer in den Steuerknoten zurückspeichert werden.

Das Anlagenkonfigurations-Eingabemodul 24 und das Gerätebeschreibungs-Ein-/Ausgabemodul 25 sind mit einem Anlagenobjektmodul 26 verbunden, um das Objektmodell, das eine standardisierte Anlagen-, Produkt- und Prozessbeschreibung enthält, mit den Steuerknoten- bzw. Teilnehmerbeschreibungen zu einem Anlagenobjektmodell zusammenzuführen. Auf der Grundlage der standardisierte Anlagen-, Produkt- und Prozessbeschreibung und den Steuerknoten- bzw. Teilnehmerbeschreibungen legt das Anlagenobjektmodul 26 die Kommunikationsbeziehungen zwischen den Steuerknoten 1 bzw. Teilnehmern 12 im Steuerknoten fest.

Anforderung an die Kommunikationsbeziehungen in Steuerungsanlagen der Industrieautomation ist die Echtzeitfähigkeit, d.h. die dezentrale Steuerung muss in allen Betriebsbedingungen rechtzeitig auf alle auftretenden Ereignisse reagieren. Der Austausch von Echtzeitdaten zwischen den Steuerknoten im Netzwerk bzw. den Teilnehmern im Steuerknoten erfolgt vorzugsweise zyklisch, um eine schnelle und deterministische Kommunikation gewährleisten zu können. Nicht-Echtzeitdaten dagegen, vor allem Parameter, die nicht permanent und zeitkritisch ausgewertet werden müssen, werden dagegen bedarfsorientiert azyklisch zwischen den Steuerknoten bzw. den Teilnehmern im Steuerknoten ausgetauscht.

Das Anlagenobjektmodul 26 legt mit den Kommunikationsbeziehungen zwischen den Steuerknoten 1 bzw. Teilnehmern 12 im Steuerknoten die Verteilung zwischen zyklischen und azyklischen Datenaustausch fest.

Die Kommunikation zwischen den Steuerknoten im Netzwerk wird gemäß der Festlegung durch das Anlagenobjektmodul 26 nach den Regeln des Feldbusprotokolls durchgeführt, wobei die auszutauschenden Daten zwischen den Steuerknoten 1 in Datentelegramme umgesetzt werden. Bevorzugte Kommunikationsinfrastruktur im Feldbus ist dabei das Ethernet-Protokoll, mit dem sich hohe Datenraten erzielen lassen. Der Datenaustausch zwischen den Teilnehmern im Steuerknoten wird dagegen, um eine schnelle Datenübertragung zu ermöglichen, vom Anlagenobjektmodul 26 bevorzugt in Form von Datenabbildungsvorgängen festgelegt, wobei jeder Teilnehmer 12 im Steuerknoten 1 ausgelegt ist, einen direkten Datenzugriff auf die zwischen den Teilnehmern über den internen Bus 13 ausgetauschten Daten durchführt.

Das Anlagenobjektmodul 26 ist weiterhin an ein Erfassungsmodul 27 angeschlossen, mit dem sich die an das Netzwerk angeschlossenen Steuerknoten 1 bzw. Teilnehmer 12 im Steuerknoten 1 ermitteln lassen. Hierzu kann das Erfassungsmodul 27 über die Feldbus-Schnittstelle 21 die an das Netzwerk angeschlossenen Steuerknoten bzw. Teilnehmer im Steuerknoten ermitteln. Jeder an das Netzwerk angeschlossene Steuerknoten bzw. jeder Teilnehmer im Steuerknoten hat nämlich eine ihm zugeordnete eindeutige Adresse, über die er angesprochen werden kann. Neben der festen Vergabe von Feldbusadressen durch den Steuerknoten selbst, können die Steuerknoten bzw. die Teilnehmer im Steuerknoten können diese Adresse z.B. wahlweise auch über das Dynamic Host Configuration Protocol (DHCP) oder per AutoIP beziehen.

Zur automatischen Erkennung der Steuerknoten bzw. der Teilnehmer im Steuerknoten kann das Erfassungsmodul 27 verschiedene Mechanismen verwenden. Das Erfassungsmodul 27 kann ein sogenanntes Broadcast-Telegramm über Feldbus-Schnittstelle 21 an alle Steuerknoten 1 bzw. Teilnehmer 12 im Steuerknoten 1, die an das Netzwerk angeschlossen werden, übertragen. Die Steuerknoten 1 bzw. die Teilnehmer 12 im Netzwerk antworten auf dieses Broadcast-Telegramm dann mit einem Antworttelegramm, um dem Erfassungsmodul 27 die Adresse des Steuerknotens bzw. des Teilnehmers im Steuerknoten bekannt geben. Als Netzwerkprotokoll zur Übertragung des Broadcast-Telegramms kann z.B. das User Datagram Protocol (UPP) verwendet werden, das ein minimales verbindungsloses Netzwerkprotokoll darstellt. Alternativ kann aber auch das Universal Plug and Play Protocol (UPNP) eingesetzt werden.

Parallel zur Adressenabfrage kann das Erfassungsmodul 26 die Steuerknoten 1 bzw. die Teilnehmer 12 im Steuerknoten 1 auch auffordern, die Steuerknoten- bzw. Teilnehmerbeschreibung, die die Netzwerkeigenschaften und die Funktionen des Gerätes charakterisiert und im Steuerknoten bzw. den Teilnehmern im Steuerknoten in einem standardisierten Format abgespeichert sind, an das Gerätebeschreibungs-Ein-/Ausgabemodul 25 zu übermitteln.

Alternativ zu einer Erfassung der Steuerknoten 1 bzw. Teilnehmer 12 im Steuerknoten über ein Broadcast-Telegramm besteht auch die Möglichkeit, dass jeder Steuerknoten am Netzwerk beim Hochfahren ein Identifizierungstelegramm mit seiner Adresse bzw. den Adressen der Teilnehmer im Steuerknoten an das Erfassungsmodul 27 der Programmiervorrichtung 2 schickt. Zusätzlich kann der Steuerknoten 1 auch die Steuerknoten- bzw. Teilnehmerbeschreibung an das Gerätebeschreibungs-Ein-/Ausgabemodul 25 übermitteln.

Das Erfassungsmodul 27 leitet die Adressen der erfassten Steuerknoten bzw. Teilnehmer im Steuerknoten und das Gerätebeschreibungs-Ein-/Ausgabemodul 25 die Steuerknoten- bzw. Teilnehmerbeschreibungen an das Anlagenobjektmodul 26 weiter. Das Anlagenobjektmodul 26 vergleicht die Anzahl der gemäß Anlagenobjektmodul vorgesehenen Steuerknoten bzw. Teilnehmer im Steuerknoten mit den erfassten Steuerknoten bzw. Teilnehmern im Steuerknoten. Falls die erfassten Steuerknoten bzw. Teilnehmer im Steuerknoten die gemäß Anlagenbeschreibung vorgesehenen Steuerknoten- bzw. Teilnehmeranzahl nicht vollständig abdecken, gibt das Anlagenobjektmodul 26 z.B. über die Mensch-Maschinen-Schnittstelle 23 eine Fehlermeldung aus. Der weitere Konfigurationsprozess der Anlage durch die Programmiervorrichtung 2 wird dann unterbrochen.

Das Anlagenobjektmodul 26 kann außerdem die aus der Datenbank 5 ausgelesenen Steuerknoten- bzw. Teilnehmerbeschreibungen mit der aktuell erfassten Steuerknoten- bzw. Teilnehmerbeschreibungen vergleichen und gegebenenfalls die in der Datenbank 5 bzw. den Steuerknoten oder Teilnehmer abgespeicherten Steuerknoten- bzw. Teilnehmerbeschreibung entsprechend aktualisieren.

Die vom Anlagenobjektmodul 26 auf der Grundlage der vom Anlagenkonfigurations-Eingabemodul 24 standardisierten Objektmodell und der Steuerknoten- bzw. Teilnehmerbeschreibungen, die über das Erfassungsmodul 27 oder das Gerätebeschreibungs-Import/Exportmodul 25 eingelesen wurden, festgelegten Kommunikationsbeziehungen zwischen den Steuerknoten 1 im Netzwerk bzw. zwischen den Teilnehmern 12 in den einzelnen Steuerknoten geben jeweils Sender und Empfänger, die Datenübertragungsart und den Datentyp an. Die zu übertragenden Daten werden dabei in Produkt- Prozess und Steuerungsparameter, Ereignisdaten und Prozessdaten aufgeteilt.

Produkt- Prozess und Steuerungsparameter werden azyklisch vor dem Produktionsprozess zur Parametrisierung zwischen Steuerknoten bzw. deren Teilnehmer übertragen. Sie sind nicht echtzeitkritisch.

Ereignisdaten dienen dazu, Anwendungsprogramme in den Steuerknoten bzw. Teilnehmer in den Steuerknoten über Ereignisse zu benachrichtigen. Solche Ereignisdaten können die Änderung eines Prozesssignals, das Überschreiten eines Grenzwertes, ein Operatoreingriff, das Auftreten eines Fehlers etc. sein. Die Ereignisdaten werden azyklisch zwischen den Teilnehmern der Kommunikationsbeziehungen ausgetauscht und sind nicht echtzeitkritisch.

Prozessdaten sind dagegen sind in der Regel Funktionsdaten, z.B. Sensordaten, die für den Prozess- und Fertigungsablauf erforderlich und echtzeitkritisch sind. Diese Prozessdaten werden zwischen den Teilnehmern vorzugsweise zyklisch ausgetauscht, um Echtzeitübertragung zu garantieren. Die Prozessdaten können jedoch auch auf azyklische Weise zwischen den Teilnehmern übertragen werden. Solche Prozessdaten, die azyklisch übertragen werden, sind Prozess- und Produktparameter für die Steuerknoten bzw. für die Teilnehmer im Steuerknoten zur Ausführung der Anwendungsprogramme.

Das Anlagenobjektmodul 26 legt außerdem mit den Kommunikationsbeziehungen fest, wie die Datenübertragung zu erfolgen hat. Bei einer Datenübertragung zwischen den Steuerknoten bzw. von Teilnehmern in einem Steuerknoten auf Teilnehmer in einem anderen Steuerknoten erfolgt die Datenübertragung gemäß dem Feldbus-Protokoll, wobei das Anlagenobjektmodul das Telegrammformat und dabei insbesondere die Datenstruktur im Telegramm vorgibt. Die Steuerknoten 1 setzen dann mit Hilfe ihrer Netzwerkanschalteinheit 11 die zu übertragenden Prozessdaten in diese vorgegebenen Telegrammformate um.

Wenn die Kommunikation nur zwischen Teilnehmern in einem Steuerknoten erfolgen soll, wird die Datenübertragung vom Anlagenobjektmodul 26 als transparente lokale Kommunikation festgelegt, wobei die Teilnehmer im Steuerknoten dann Datenabbildungsvorgänge ausführen, bei denen ein direkter Datenzugriff der Teilnehmer auf das übertragene Steuerknotenprozessabbild durchgeführt wird. Im Gegensatz zur Netzwerkübertragung ist dann kein Umkopieren der Daten in Datentelegramme notwendig, wodurch sich eine besonders schnelle Datenübertragung zwischen Teilnehmern eines lokalen Knotens erreichen lässt.

Das Anlagenobjektmodul 26 übergibt den Datensatz mit den festgelegten Kommunikationsbeziehungen an ein Konfigurations-Ausgabemodul 28, das die vom Anlagenobjektmodul 26 festgelegten Kommunikationsbeziehungen in Telegramme umsetzt, um sie über die Feldbus-Schnittstelle 21 und den Feldbus 3 auf die Steuerknoten 1 bzw. die Teilnehmer 12 in den Steuerknoten zu übertragen.

Ferner ist in der Programmiervorrichtung 2 ein mit dem Anlagenobjektmodul 26 verbundenes Prozessparameter-Ausgabemodul 29 vorgesehen, das die vom Anlagenobjektmodul 26 auf die einzelnen Teilnehmer bzw. Steuerknoten verteilten Prozess- und Produktparameter in Telegramme umsetzt und diese über die Feldbus-Schnittstelle 21 und den Feldbus 3 auf die Steuerknoten 1 bzw. die Teilnehmer 12 in den Steuerknoten überträgt.

Zusätzlich kann die Programmiervorrichtung 2 noch ein Überwachungsmodul 30 aufweisen, das über die Feldbus-Schnittstelle 21 und den Feldbus 3 an den Steuerknoten 1 angeschlossen ist, um während des Maschinenbetriebs den Status der Steuerknoten bzw. der Teilnehmer im Steuerknoten zu überwachen und eine Fehlererfassung durchzuführen, wobei die Fehler über die die Feldbus-Schnittstelle 21 übertragen oder über die Mensch-Maschinen-Schnittstelle 23 angezeigt werden können.

Die Mensch-Maschinen-Schnittstelle 23 der Programmiervcrrichtung 2 weist vorzugsweise eine Bedienoberfläche 31 für den Operator auf, über die vorzugsweise graphisch eine vollständige Anlagen-, Produkt- und Prozessbeschreibung erfolgt. Hierbei können die Steuerknoten bzw. Teilnehmer im Steuerknoten, die Netzwerktopologie und die Netzwerkparameter, die Steuerknoten- und Teilnehmerbeschreibung und die Prozess- und Produktparameter dargestellt werden. Weiterhin kann auf der Bedienoberfläche 31 die vom Anlageobjektmodul 26 festgelegten Datensätze mit den Kommunikationsbeziehungen angezeigt werden. Auch kann das Anlagenobjektmodell, die Anlagen-, Produkt- und Prozessbeschreibung, die Beschreibungen einzelner Steuerknoten aber auch der Gesamtanlage auf der Bedienoberfläche 31 visualisiert werden. Die Bedienoberfläche 31 kann so ausgelegt sein, dass die einzelnen Darstellungen auch vom Operator verändert werden können. Diese Eingaben werden dann über die Mensch-Maschinen-Schnittstelle 23 auf das Anlagenobjektmodul 26 zurückgekoppelt.

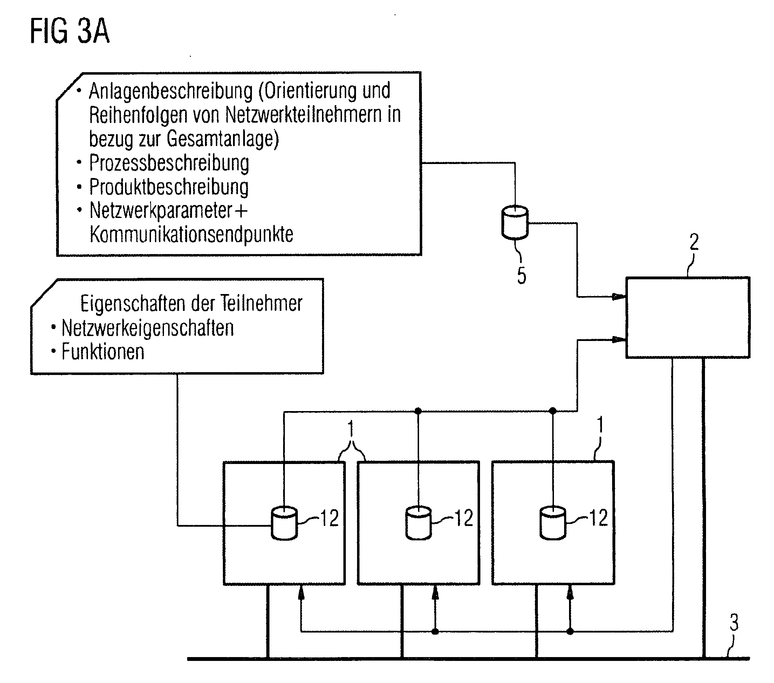

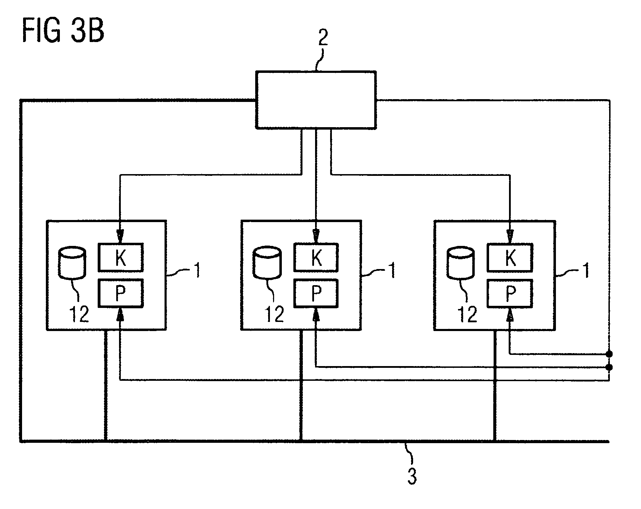

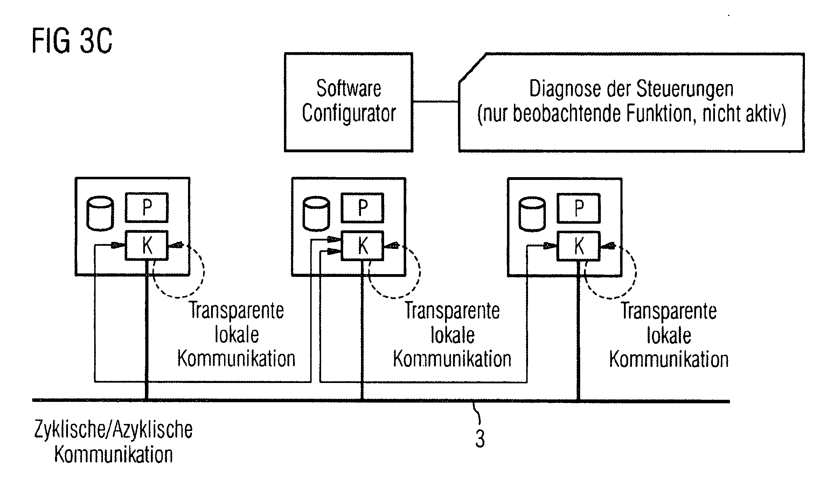

Fig. 3A bis C zeigen verschiedene Betriebsmodi der in Fig. 1 dargestellten dezentralen Steuerung mit einem Netzwerk aus Steuerknoten 1 und einer Programmiervorrichtung 2, wie sie in Fig. 2 im Detail dargestellt ist. In Fig. 3A und Fig. 3B sind die beiden Initialisierungsschritte der Programmiervorrichtung 2, nämlich die Erkennungsphase und die Konfigurationsphase der dezentralen Steuerung, und in Fig. 3C der Maschinenbetrieb gezeigt. Der jeweils durchgeführte Datenaustausch ist in den Figuren durch Pfeile gekennzeichnet.

In der in Fig. 3A gezeigten Erkennungsphase importiert die Programmiervorrichtung 2 die Anlagenbeschreibung, die z.B. mithilfe eines Engineering-Systems 5 erzeugt wurde, um einen bestimmten Produktions- und Fertigungsprozess auszuführen. Die Anlagenbeschreibung umfasst die Orientierung und die Reihenfolge der Teilnehmer am Netzwerk im Bezug zur Gesamtanlage zur Ausführung des gewünschten Produktions- und Fertigungsprozesses. Ferner liest die Programmiervorrichtung 2 eine Prozessbeschreibung und eine Produktbeschreibung sowie Informationen über die Netzwerkparameter und die Kommunikationsendpunkte vom Engineering-System ein.

Gleichzeitig erfasst die Programmiervorrichtung 2 die am Netzwerk angeschlossenen Steuerknoten 1 bzw. Teilnehmer 12 im Steuerknoten. Die Steuerknoten 1 bzw. die Teilnehmer 12 im Steuerknoten beziehen beim Hochfahren am Feldbus 3 über DHCP oder per Auto-IP z.B. von einem Server (nicht dargestellt) eine gültige Adresse. Diese gültige Adresse kann jedoch auch vorher bereits im Steuerknoten bzw. den Teilnehmern im Steuerknoten eingespeichert sein. Die Steuerknoten bzw. die Teilnehmer am Steuerknoten übermitteln diese Adresse an die Programmiervorrichtung 2 entweder automatisch beim Hochfahren am Netzwerk oder auf Anforderung durch die Programmiervorrichtung z.B. mit Hilfe eines Broadcast-Telegramms.

Parallel zur Erkennung der am Netzwerk angeschlossenen Teilnehmer erfasst die Programmiervorrichtung 2 auch die Teilnehmereigenschaften. Die Steuerknoten- und Teilnehmerbeschreibungen kennzeichnen die Netzwerkeigenschaften der Teilnehmer sowie ihre Funktionen. Diese Steuerknoten- und Teilnehmerbeschreibungen erhält die Programmiervorrichtung 2 entweder von einer externen Datenbank (nicht gezeigt) oder über den Feldbus 3 direkt von Steuerknoten bzw. Teilnehmern im Steuerknoten.

Die Programmiervorrichtung 2 stellt mit Hilfe der Mensch-Maschinen-Schnittstelle die eingelesenen Informationen vorzugsweise editierbar auf der Bedienoberfläche dar, so dass der Operator Veränderungen vornehmen kann, z.B. in den Steuerknoten- und Teilnehmerbeschreibungen, den Produkt- und Prozessparametern und der Netzwerktopologie und deren Parametern.

In der auf die Erkennungsphase folgenden Konfigurationsphase, die in Fig. 3B gezeigt ist, legt die Programmiervorrichtung 2 die Kommunikationsparameter zwischen den Teilnehmern am Netzwerk fest. Hierbei werden die Ereignis- und Datenströme definiert, sowie die Art der Datenübertragung zyklisch, d.h. echtzeitfähig, oder azyklisch bestimmt. Der festgelegte Datensatz mit den Kommunikationsbeziehungen K wird dann von der Programmiervorrichtung 2 über den Feldbus 3 in die Steuerknoten bzw. Teilnehmer im Steuerknoten eingeschrieben. Hierbei wird den Teilnehmern die Datenübertragungsart, der Datentyp und der Sender bzw. Empfänger der Daten vorgegeben. Zusätzlich überträgt die Programmiervorrichtung 2 die für die einzelnen Steuerknoten bzw. Teilnehmer im Steuerknoten wichtigen Prozessparameter P zur Durchführung des Produktions- und Fertigungsprozesses.

Nach Abschluss der in Fig. 3A und 3B gezeigten Initialisierungsschritte schaltet das Netzwerk dann in den Maschinenbetrieb um, um den gewünschten Produktions- und Fertigungsprozess auszuführen. In diesem Betriebsmodus wird die Programmiervorrichtung 2 von der dezentralen Steuerung, wie in Fig. 3C gezeigt, nicht mehr benötigt. Die Programmiervorrichtung 2 ist dann entweder abgeschaltet oder hat beobachtende Funktion beim Produktions- und Fertigungsprozess, also dient der Fehlerüberwachung und Diagnose. Die Programmiervorrichtung kann aber auch Leitrechnerfunktion haben und in den Steuerungsprozess eingebunden sein.

Die Steuerknoten bzw. die Teilnehmer im Steuerknoten tauschen während des Produktions- und Fertigungsprozesses autark über die von der Programmiervorrichtung 2 vorkonfigurierten Kommunikationsbeziehungen Prozess- und Ereignisdaten aus. Bei einem Datenaustausch zwischen Teilnehmern in einem Steuerungsknoten erfolgt die Datenübertragung dabei transparent durch Datenabbildungsvorgänge mit einem direkten Datenzugriff jedes Teilnehmers auf das zwischen den Teilnehmern übertragene Steuerknotenprozessabbild. Bei einer Datenübertragung zwischen den Steuerknoten im Netzwerk wird die Datenübertragung gemäß dem vorgebenen Netzwerkprotokoll vorgenommen, wobei die Steuerknotendaten von den zugehörigen Netzwerkanschaltungen in die Netzwerktelegramme umgesetzt werden.

## Patentansprüche

1. Programmiervorrichtung (2) für ein Netzwerk (3) aus Steuerknoten (1) mit
einem Erfassungsmodul (27) zum Ermitteln der an das Netzwerk angeschlossenen Steuerknoten,
einem mit dem Erfassungsmodul verbundenen Anlagenobjektmodul (26), das ein die Steuerknoten-Konfiguration des Netzwerkes repräsentierendes Anlagenobjektmodell enthält, wobei das Anlagenobjektmodul ausgelegt ist, die Kommunikationsbezichungen zwischen den ermittelten Steuerknoten auf der Grundlage des Anlagenobjektmodells festzulegen, und
einem mit dem Anlagenobjektmodul verbundenen Konfigurations-Ausgabemodul (28) zum Übertragen der durch das Anlagenobjektmodul festgelegten Kommunikationsbeziehungen zwischen den Steuerknoten im Netzwerk auf die Steuerknoten, **gekennzeichnet durch**
ein mit dem Anlagenobjektmodul (26) verbundenes Anlagenkonfigurations-Eingabemodul (24) zum Umwandeln einer Anlagen-, Produkt- und Prozessbeschreibung in ein Objektmodell, das in einer standardisierten Format die Anlagen-, Produkt- und Prozessbeschreibung enthält, und
ein mit dem Anlagenobjektmodul (26) verbundenes Gerätebeschreibungs-Eingabe/Ausgabemodul (25) zum Ein- und Ausgeben von Steuerknotenbeschreibungen,
wobei das Anlagenobjektmodul (26) ausgelegt ist, das Objektmodell, das in einer standardisierten Format die Anlagen-, Produkt- und Prozessbeschreibung enthält, mit den Steuerknotenbeschreibungen zu dem Anlagenobjektmodell zusammenzuführen.

2. Programmiervorrichtung nach Anspruch 1, **dadurch gekennzeichnet, dass** das Anlagenobjektmodul (26) ausgelegt ist, die Kommunikationsbeziehungen zwischen den ermittelten Steuerknoten im Netzwerk durch die Adressen der entsprechenden Steuerknoten und der vorzunehmenden Datenübertragungsart festzulegen.

3. Programmiervorrichtung nach Anspruch 1 oder 2, **dadurch gekennzeichnet, dass** das Anlagenobjektmodul (26) ausgelegt ist, ferner die Kommunikationsbeziehungen zwischen Teilnehmern (12) im Steuerknoten (1) auf der Grundlage des Anlagenobjektmodells festzulegen, und wobei das mit dem Anlagenobjektmodul verbundene Konfigurations-Ausgabemodul (28) ausgelegt ist, die durch das Anlagenobjektmodul festgelegten Kommunikationsbeziehungen zwischen den Teilnehmern im Steuerknoten auf den Steuerknoten zu übertragen.

4. Programmiervorrichtung nach Anspruch 3, **dadurch gekennzeichnet, dass** das Anlagenobjektmodul (26) ausgelegt ist, die Kommunikationsbeziehungen zwischen den Teilnehmern (12) im Steuerknoten auf der Grundlage des Anlagenobjektmodells durch Datenabbildungsvorgänge zwischen den Teilnehmern festzulegen.

5. Programmiervorrichtung nach einem der Ansprüche 1 bis 4, **gekennzeichnet durch** ein mit dem Anlagenobjektmodul (26) verbundenes Prozessparameter-Ausgabemodul (29) zum Ausgeben von Prozess- und Produktparametern auf die Steuerknoten (1).

6. Programmiervorrichtung nach einem der Ansprüche 1 bis 5, **gekennzeichnet durch** ein mit dem Anlagenobjektmodul verbundenes Überwachungsmodul (30) zum Überwachen der Steuerknoten (1).

7. Programmiervorrichtung nach einem der Ansprüche 1 bis 6, **gekennzeichnet durch** ein Bearbeitungsmodul (23, 31) zum Darstellen und /oder Bearbeiten des Anlagenobjektmodells und der Anlagen-, Produkt- und Prozessbeschreibung.

8. Anlage, die ein Netzwerk mit Steuerknoten (1) und eine Programmiervorrichtung (2) nach einem der Ansprüche 1 bis 7 umfasst, **dadurch gekennzeichnet, dass** die Programmiervorrichtung ausgelegt ist, die Kommunikationsbeziehungen zwischen den Steuerknoten bzw. in den Steuerknoten im Rahmen eines I-nitialisierungsvorgangs festzulegen.

9. Anlage nach Anspruch 8, **dadurch gekennzeichnet, dass** das Erfassungsmodul (27) der Programmiervorrichtung (2) zum Ermitteln der an die Anlage angeschlossenen Steuerknoten (1) ein Broadcast-Telegramm im angeschlossenen Netzwerk (3) verschickt, auf das die an das Netzwerk angeschlossenen Steuerknoten mit einem Identifizierungstelegramm antworten.

10. Anlage nach Anspruch 9, **dadurch gekennzeichnet, dass** jeder Steuerknoten (1) beim Hochfahren ein Identifizierungstelegramm an das Erfassungsmodul (27) der Programmiervorrichtung (2) schickt.

11. Anlage nach einem der Ansprüche 8 bis 10, **dadurch gekennzeichnet, dass** jeder Steuerknoten (1) über eine gültige Adresse verfügt, die fest eingespeichert ist oder per DHCP oder per AUTO-IP bezogen werden kann und an die Programmiervorrichtung (2) übermitteln wird.

12. Anlage nach einem der Anspruche 8 bis 11, **dadurch gekennzeichnet, dass** die Datenübertragung zwischen den Steuerknoten (1) im Netzwerk in Form von Datenpaketen, die auf dem Netzwerk (3) übertragen werden, erfolgt, wobei die Steuerknoten ausgelegt sind, ein Umsetzen eines Steuerknoten-Prozessabbildes auf die Datentelegramme durchzuführen.

13. Anlage nach einem der Ansprüche 8 bis 12, **dadurch gekennzeichnet, dass** die Datenübertragung zwischen den Teilnehmern (12) im Steuerknoten (1) in Form von Datenabbildungsvorgängen erfolgt, wobei jeder Teilnehmer im Steuerknoten ausgelegt ist, einen direkten Datenzugriff mit dem zwischen den Teilnehmern übertragenden Steuerknoten-Prozessabbild durchzuführen.

## Claims

1. A programming device (2) for a network (3) of control nodes (1) comprising
a recording module (27) for determining the control nodes connected to the network,
a system object module (26) connected to the recording module, the system object module (26) comprising a system object model representing the control-node configuration of the network, the system object module being configured to define the communication relations between the determined control nodes on the basis of the system object model, and
a configuration output module (28) connected to the system object module for transmitting the communication relations between the control nodes in the network to the control nodes, the communication relations being determined by the system object module,
**characterized by**
a system configuration input module (24) connected to the system object module (26) for converting a system description, a product description and a process description into an object model which comprises the system description, the product description and the process description in a standardized format, and
a device-description input/output module (25) connected to the system object module (26) for inputting and outputting control node descriptions,
wherein the system object module (26) is configured to combine the object model which comprises the system description, the product description and the process description in a standardized format with the control node descriptions to form the system object model.

2. The programming device according to claim 1, **characterized in that** the system object module (26) is configured to define the communication relations between the determined control nodes in the network by the addresses of the corresponding control nodes and the kind of data transmission to be carried out.

3. The programming device according to claim 1 or 2, **characterized in that** the system object module (26) is configured to further determine the communication relations between subscribers (12) in the control node (1) on the basis of the system object model, and wherein the configuration output module (28) connected to the system object module is configured to transmit the communication relations between the subscribers in the control node which are determined by the system object module to the control node.

4. The programming device according to claim 3, **characterized in that** the system object module (26) is configured to determine the communication relations between the subscribers (12) in the control node on the basis of the system object model by means of data imaging processes between the subscribers.

5. The programming device according to any one of claims 1 to 4, **characterized by** a process parameter output module (29) connected to the system object module (26) for outputting process and product parameters to the control nodes (1).

6. The programming device according to any one of claims 1 to 5, **characterized by** a monitoring module (30) connected to the system object module for monitoring the control nodes (1).

7. The programming device according to any one of claims 1 to 6, **characterized by** a processing module (23, 31) for depicting and/or processing the system object model and the system description, the product description and the process description.

8. A system which comprises a network with control nodes (1) and a programming device (2) according to any one of claims 1 to 7, **characterized in that** the programming device is configured to determine the communication relations between the control nodes or, respectively, in the control nodes within the framework of an initialization process.

9. The system according to claim 8, **characterized in that** the recording module (27) of the programming device (2) transmits a broadcast telegram in the connected network (3) for determining the control nodes (1) connected to the system, the control nodes connected to the network replying to the broadcast telegram with an identification telegram.

10. The system according to claim 9, **characterized in that** each control node (1) transmits an identification telegram to the recording module (27) of the programming device (2) when booting.

11. The system according to any one of claims 8 to 10, **characterized in that** each control node (1) comprises a valid address which is permanently stored or may be obtained via DHCP or via auto-IP and which is forwarded to the programming device (2).

12. The system according to any one of claims 8 to 11, **characterized in that** the data transmission between the control nodes (1) in the network is carried out in the form of data packets which are transmitted on the network (3), wherein the control nodes are configured to carry out a conversion of a control node process image to the data telegrams.

13. The system according to any one of claims 8 to 12, **characterized in that** the data transmission between the subscribers (12) in the control node (1) is carried out in the form of data imaging processes, wherein each subscriber in the control node is configured to carry out a direct data access with the control node process image transmitted between the subscribers.

## Revendications

1. Dispositif de programmation (2) destiné à un réseau (3) constitué de noeuds de commande (1), comprenant :
un module de détection (27) destiné à déterminer les noeuds de commande connectés au réseau,
un module d'objet d'installation relié au module de détection (26), qui comporte un modèle d'objet d'installation représentant la configuration des noeuds de commande du réseau, dans lequel le module d'objet d'installation est apte à établir les relations de communication entre les noeuds de réseau déterminés sur la base du modèle d'objet d'installation, et
un module de sortie de configuration (28) relié au module d'objet d'installation, destiné à transmettre aux noeuds de commande les relations de communication établies par le module d'objet d'installation entre les noeuds de commande du réseau,
**caractérisé par**
un module d'entrée de configuration d'installation (24) relié au module d'objet d'installation (26), destiné à convertir une description d'installation, de produit et
de processus en un modèle d'objet qui comporte la description d'installation, de produit et de processus en un format normalisé, et
un module d'entrée/sortie de description d'appareil (25) relié au module d'objet d'installation (26), destiné à l'entrée et à la sortie de descriptions de noeuds de commande,
dans lequel le module d'objet d'installation (26) est apte à combiner le modèle d'objet comportant la description d'installation, de produit et de processus en format normalisé, aux descriptions de noeuds de commande, en le modèle d'objet d'installation.

2. Dispositif de programmation selon la revendication 1, **caractérisé en ce que** le module d'objet d'installation (26) est apte à établir les relations de communication entre les noeuds de commande déterminés sur le réseau à partir des adresses des noeuds de commande correspondants et du type de transmission de données à utiliser.

3. Dispositif de programmation selon la revendication 1 ou 2, **caractérisé en ce que** le module d'objet d'installation (26) est en outre apte à établir les relations de communication entre des abonnés (12) du noeud de commande (1) sur la base du modèle d'objet d'installation, et dans lequel le module de sortie de configuration (28) relié au module d'objet d'installation est apte à transmettre au noeud de commande les relations de communication établies par le module d'objet d'installation entre les abonnés du noeud de commande.

4. Dispositif de programmation selon la revendication 3, **caractérisé en ce que** le module d'objet d'installation (26) est apte à établir les relations de communication entre les abonnés (12) du noeud de commande sur la base du modèle d'objet d'installation à partir des processus de formation d'images de données s'effectuant entre les abonnés.

5. Dispositif de programmation selon l'une quelconque des revendications 1 à 4, **caractérisé par** un module de sortie de paramètres de processus (29) relié au module d'objet d'installation (26), destiné à fournir en sortie aux noeuds de commande (1) des paramètres de processus et de produits.

6. Dispositif de programmation selon l'une quelconque des revendications 1 à 5, **caractérisé par** un module de surveillance (30) relié au module d'objet d'installation, destiné à surveiller les noeuds de commande (1).

7. Dispositif de programmation selon l'une quelconque des revendications 1 à 6, **caractérisé par** un module de traitement (23, 31) destiné à représenter et/ou traiter le modèle d'objet d'installation et la description d'installation, de produit et de processus.

8. Installation comprenant un réseau comportant des noeuds de commande (1) et un dispositif de programmation (2) selon l'une quelconque des revendication 1 à 7, **caractérisé en ce que** le dispositif de programmation est apte à établir les relations de communication entre les noeuds de commande ou dans les noeuds de commande dans le contexte d'un processus d'initialisation.

9. Installation selon la revendication 8, **caractérisée en ce que** le module de détection (27) du dispositif de programmation (2), pour obtenir les noeuds de commande (1) connectés à l'installation, envoie sur le réseau connecté (3) un télégramme de diffusion aux noeuds de commande (1) connectés, auquel les noeuds de commande connectés au réseau répondent par un télégramme d'identification.

10. Installation selon la revendication 9, **caractérisée en ce que** chaque noeud de commande (1) envoie un télégramme d'identification au module de détection (27) du dispositif de programmation (2) lors d'un démarrage.

11. Installation selon l'une quelconque des revendications 8 à 10, **caractérisée en ce que** chaque noeud de commande (1) dispose d'une adresse valide qui peut être stockée de manière permanente ou être obtenue par DHCP ou par AUTO-IP et qui est transférée au dispositif de programmation (2).

12. Installation selon l'une quelconque des revendications 8 à 11, **caractérisée en ce que** la transmission de données entre les noeuds de commande (1) du réseau s'effectue sous la forme de paquets de données qui sont transmis sur le réseau (3), dans lequel les noeuds de commande sont aptes à effectuer une transformation d'une image des processus des noeuds de commande en les télégrammes de données.

13. Installation selon l'une quelconque des revendications 8 à 12, **caractérisée en ce que** la transmission de données entre les abonnés (12) du noeud de commande (1) s'effectue sous la forme de processus de formation d'images des données, dans lequel chaque abonné d'un noeud de commande est apte à effectuer un accès direct à l'image de processus du noeud de commande transmise entre les abonnés.
